(19)

Europäisches
Patentamt

European
Patent Office

Office européen
des brevets

(11) **EP 2 874 421 A1**

(12) **EUROPEAN PATENT APPLICATION**

(43) Date of publication:
**20.05.2015 Bulletin 2015/21**

(21) Application number: **13306551.6**

(22) Date of filing: **13.11.2013**

(51) Int Cl.:
*H04W 12/06* (2009.01)          *H04L 29/06* (2006.01)
*G06Q 20/32* (2012.01)          *G06Q 20/20* (2012.01)
*G06Q 20/40* (2012.01)          *G06Q 20/38* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA
92190 Meudon (FR)**

(72) Inventors:
• **Gouget, Aline
92190 Meudon (FR)**
• **Gullberg, Peter
92190 Meudon (FR)**
• **Smadja, Philippe
92190 Meudon (FR)**

(74) Representative: **Lotaut, Yacine Diaw
Gemalto S.A.
Intellectual Property Department
6, rue de la Verrerie
92190 Meudon (FR)**

(54) **System and method for securing communications between a card reader device and a remote server**

(57)     The present invention concerns the implementation of end-to-end security for the communication between a low cost card reader and the remote server. The purpose of the present invention is the establishment of a secure channel between the card reader and the remote server through an un-trusted communication device (e.g. a smart phone or a tablet) that is intrinsically resistant to some basic differential side-channel analysis in a context where there is no secure random number generator and no source of entropy in the card reader, while providing the following characteristics:
- Mutual authentication between the card reader and the server
- Secure channel based on session keys such that the keys of the secure channel related to a past transaction cannot be re-played, or the session keys of a future transaction cannot be pre-computed by the card reader and later re-use by the card reader in a legitimate transaction.

Fig. 3

EP 2 874 421 A1

**Description**

**TECHNICAL FIELD**

The present invention generally relates to systems and methods for securing communications between a card reader device and a remote server through a connected terminal.

Particularly, the present invention relates to a system and method for establishing an end-to-end secure channel for a transaction payment between a reader of a card payment connected to a terminal and a remote server through an unsecure network.

**BACKGROUND ART**

Well known payment cards are used by millions of people worldwide to facilitate various types of commercial transactions. In a typical transaction involving the purchase of a product or service at a merchant location, the payment card is presented at a point of sale terminal ("POS terminal") located at a merchant's place of business. The POS terminal may be a card reader or similar device that is capable of accessing data stored on the payment card, where this data includes identification and authentication data. Data read from the payment card is provided to the merchant's transaction processing system and then to the acquirer, which is typically a bank or other institution that manages the merchant's account.

To ensure the security and global interoperability of chip based payment cards, it is well known EMV standards which define the interaction between EMV-compliant payment cards and EMV-compliant POS terminals. Therefore to accept EMV payments, merchants have to deploy EMV-compliant POS terminals. Such EMV-compliant POS terminals hardware, their deployment and their maintenance are considerable costs for the merchants.

Today, technology has revolutionized the way that consumers make purchases and expanded the range of retail channels. Indeed, mobile devices, such as mobile phones, play an increasingly versatile role in daily life. Many new features and services are being developed in an attempt to expand mobile phones beyond their traditional role of voice and message transmission.

However, payment card has not been adopted by the online market, although they provide the best security to conduct electronic commerce. The main reasons are the high cost of the card reader and the complexity of the system for most people. Not only a card but also a reader must be provided to the millions of potential end-users who comprise this market base.

To make payment card adopted by the online market, low cost card reader device has been developed. The low cost card reader device comprises interfaces able to be connected to a mobile device. This kind of card reader has no secure random number generator or entropy source. Furthermore, the implementation should not embed advanced countermeasures against side-channel attacks. This unsecure low cost card reader does not provide necessary securities to conduct electronic commerce.

With this kind of card reader, it is clear that there is an increasing desire for faster, cheaper, secure and more convenient low cost card reader to conduct secure transactions.

There is a need to make safe credit card payments in stores, on Internet and person-to- person which are inexpensive, easy to manage and portable.

**SUMMARY OF THE INVENTION**

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

The present invention addresses the aforementioned security drawbacks of transactions with a low cost card reader. The present invention relates to a system and method for protecting the data transiting between the card reader and a remote server through a mobile device, over an unsecure network during a transaction.

This invention concerns the implementation of end-to-end security for the communication between the low cost card reader and the remote server. The purpose of the present invention is the establishment of a secure channel between the card reader and the remote server through an un-trusted communication device (e.g. a smart phone or a tablet) that is intrinsically resistant to some basic differential side-channel analysis in a context where there is no secure random number generator and no source of entropy in the card reader, while providing the following characteristics:

- Mutual authentication between the card reader and the server

- Secure channel based on session keys such that the keys of the secure channel related to a past transaction cannot be re-played, or the session keys of a future transaction cannot be pre-computed by the card reader and later re-use by the card reader in a legitimate transaction.

The present invention does not attempt to mitigate attacks such as Simple Electromagnetic Analysis (SEMA) or Simple Power Analysis (SPA); mitigation techniques strongly depend on the hardware.

Instead, the present invention only intends to mitigate the feasibility of differentials attacks such as Differential Electromagnetic Analysis (DEMA), Correlation Electromagnetic Analysis (CEMA), Differential Power Analysis (DPA), Correlation Power Analysis (CPA).

With the present invention, the management of the crypto computation is within the card reader, while the server is not necessarily involved. Indeed, by forcing an attacker to use legitimate transactions in order to get sufficiently Electromagnetic or Power Measurements should first increase the time of the attack and second, the attacker could be detected (in some extend) on the server side.

The present invention provides an inexpensive and easy way to use card reader to secure any transactions (even online transactions) over the mobile device "such as a phone". The card reader and the remote server authenticate both when managing bank accounts, making payments, or eventually voting online, for example.

The present invention proposes a method for securing the data transferred between the card reader and the remote server. For that, the present invention proposes a method for encrypting data transferred. Besides, the present invention proposes method of verifying of origin/integrity of the data transferred.

Aspects of the embodiments of the present invention relate in general to a method of defining how to setup the secure channel between the card reader and the remote server, how it runs and what are the required data and cryptography algorithms. The present invention defines a secure, simple and efficient protocol to make secure transaction with a card reader connected to a mobile device.

In a various method of the present invention, during a personalization/registration phase the followings steps can be performed:

- a reader key RK is generated and can be personalized into said card reader. The reader key is unique per card reader. It can be retrieved by the server.
- at each card reader is personalized a unique serial number SN. This serial number is associated to the reader key into the database of the server.
- each card reader comprises a counter, for example a Device Transaction Counter (DTC). This counter is incremented after each successful authentication of the server.

The present invention focus on the protection of all the command/responses that can be sent to the card reader and received from it, without necessarily involving a legitimate server in the communication.

The present invention proposes a method to protect sensible Session-Setup command, since it is the only command that could enable an attacker to force the usage of the reader master key in crypto computation, without involving the legitimate server. Using this command, the card reader has on input a random value Server-RND and a Message Authentication Code (MAC) of a pre-defined format message that contains the value Server-RND. As an example, the pre-defined message could be:

$$\text{Message} = \text{ConstantValue} \| \text{ random value Server-RND.}$$

The verification of the MAC by the card reader requires foremost the computation of the session key for MAC verification.

The present invention relates in general to a method of generating encryption session keys and integrity session keys. The session keys are computed using the secret reader key and a diversifying data that comprises the random value Server-RND that is chosen by the legitimate server (or the attacker) and a predictable value that is under the control of the card reader (the counter DTC). The reader key is derived from a master key and the serial number SN of the card reader

The random value chosen by the legitimate server (or the attacker) is useful to provide the guarantee to the server that the current secure channel session has not been pre-computed and the legitimate card reader is indeed at the other end of the channel. The size of this random value does not need to be very large, few bits could be sufficient. The size of the random value Server-RND is preferably set in accordance with the error management and the level of tolerance that is considered acceptable. The size of the random value may be small enough in order to upper bound the flexibility of an attacker that would want to recover the MAC verification session key using for example a DEMA or DPA.

**EP 2 874 421 A1**

The value of DTC is under the sole control of the card reader. The DTC value is involved in the session key derivation function and this value is updated only after a successful MAC verification is performed by the card reader allowing authenticating the server. The uniqueness of DTC is important in the invention, since it is the guarantee that the session keys will be unique per secure channel session. The size of DTC is preferably large enough to cover the full life-cycle of the product. As an example, a 4-bytes DTC value would be appropriate if the maximum number of transactions has to be upper bounded by $2^{32}$.

Then, without involving the server, an attacker won't succeed in forging a valid MAC (assuming that the MAC algorithm is cryptographically secure) and the flexibility of the attacker in the message input of the diversification algorithm is only determined by the size of the random value Server-RND.

The format of the diversifying data and the size of the random value Server-RND have to be set by taking into account the specification of the session key derivation function. One main advantage of the invention is to use a single-step key derivation for involving both a randomness chosen by the server/attacker and a unique value per session which is under the sole control of the card reader, instead of using a 2 steps key derivation, i.e. 1 step to involve the unique value per session that is under the sole control of the card reader, and one additional step for using the random value chosen by the server/attacker.

During the phase of verification of the MAC and the step of incrementing the DTC the target of an attacker is the MAC verification session key. The size of the random value Server-RND and the format of the pre-determined message are means for limiting the attacker flexibility, i.e. the size of the message, the size of the constant, localization of the random value Server-RND. The format of the message to be verified by MAC is preferably set by taking into account the specification of the MAC algorithm.

Such systems and methods of the present invention improve the security of information transferred between a card reader and a server by providing efficient means for secure communication channel.

To achieve those and other advantages, and in accordance with the purpose of the invention as embodied and broadly described, the invention proposes a method for securing a transaction between an unsecure card reader connected to a mobile device and a remote server wherein when a transaction is initiated:

- deriving a session encryption keys and session integrity keys from a reader key and a diversifying data, said diversifying data comprising a random value generated by the server and an updated predictable value generated by the card reader,
- when an authentication of the server by the card reader is successful, the predictable value is updated,
- when an authentication of the card reader by the server is successful, a secure session channel between the card reader and the server is set up wherein the session encryption keys and the session integrity keys protect the confidentially and the integrity of messages exchanged between the card reader and the server,
- sending commands from the server to a smart card connected to the card reader via the secure session channel,
- receiving commands responses from the smart card to the server through the card reader via the secure channel.

In other various methods, the reader key is derived from a master key and an identifier of the card reader. The identifier of the card reader is a serial number unique at each card reader.

In other various methods, the derivation session keys by the server comprise the following steps:

- a request for the establishment of a secure channel is sent from the card reader to the server through the mobile device, wherein said request comprises the current updated predictable value and the card reader identifier,
- incrementing the received predictable value,
- generation of the random value,
- derivation by the server of the session encryption key and the session integrity key from the stored reader master key, the received card reader identifier, the generated random value, and the incremented received predictable value.

In other various methods, the authentication step of the server by the card reader comprises the following steps:

- computing a MAC signature value from the session integrity key and at least one part of the contents of the generated random value,
- a request of authentication is sent from the server to the card reader through the mobile device, wherein said request comprising the generated random value and the computed MAC value,
- upon the authentication request is received by the card reader, incrementing the last updated predictable value,
- derivation by the card reader of the session encryption keys and the session integrity keys from the reader master key, the card reader identifier, the received random value, and the incremented last updated predictable value,
- the server is authenticated by the card reader if a verification of the received MAC value is successful.

4

In other various methods, the current predictable value is updated with the incremented value when the authentication of the server is successful. The updated predictable value is stored into the database of the card reader or in a secure element of the card reader. When the updated predictable value reached a predefined maximum predictable value, the card reader is locked or in standby until a new predefined maximum value is defined.

In other various methods, the authentication step of the card reader by the server comprises the following steps:

- computing a MAC signature value from the session integrity key and at least one part of the updated predictable value,
- a request of authentication is sent from the card reader to the server through the mobile device, wherein said request comprising the updated predictable value and the computed MAC value,
- the card reader is authenticated by the server if a verification of the received MAC value is successful.

In other various methods, when the authentication request of the server is sent to the card reader, a sequence number counter of the server is incremented sequentially. When the server is authenticated by the card reader, a sequence number counter of the card reader is incremented sequentially. The authentication request of the card reader by the server comprises the current sequence number value of the card reader. Upon the authentication request is received, the server checks if the received sequence number value corresponds to the value of its sequence number counter. If the verification is successful, the received MAC value is verified to authenticate the card reader.

In other various methods, a disabling-counter of the card reader is incremented when the authentication of the server by the card reader fails. If the disabling-counter value reached a predefined maximum error, the card reader deactivates itself.

In other various methods, after the establishment of the secure channel between the card reader and the remote server, an errorcounter of the card reader is incremented when an invalid incoming message is received. If the errorcounter value reached a predefined maximum error, the card reader closes the session of the validation step transaction. When the validation step transaction session is completed and the errorcounter value is less than the predefined maximum error, the errorcounter is cleared.

In other various methods, the session encryption key and the session integrity key comprise four symmetric keys unique for each transaction session,

- transmission encryption key TENC used by the server to encrypt the command to the smart card connected to the card reader, the transmission encryption key TENC is used by the card reader to decrypt the commands,
- transmission integrity key TMAC used by the server to compute a MAC value from the command, the transmission integrity key TMAC is used by the card reader to check the received MAC value,
- reception encryption key RENC used by the card reader to encrypt the responses of the command, the reception encryption key RENC is used by the server to decrypt the received responses,
- reception integrity key RMAC used by the card reader to compute a MAC value from the command responses, the reception integrity key RMAC is used by the server to check the received MAC value.

The present invention relates also a validation transaction processing system, comprising an unsecure card reader connected to a mobile device and a remote server wherein validation transaction messages transiting between a smart card connected to the card reader and the remote server are secured according to the present invention.

The method of the present invention has many technological advantages, among them: maintain a low cost card reader, simplicity of generating the session keys, and a strong protection of data transmitted.

## BRIEF DESCRIPTION OF THE DRAWINGS

The following detailed description will be better understood with the drawings, in which:

FIG. 1 illustrates the different entities involved in a process to secure transactions between a card reader connected to a mobile device and a remote server through an unsecure network.
FIG. 2 is a logic flow diagram in accordance with an exemplary embodiment of this invention during a setup phase of key generation.
FIG. 3 is a transaction flow diagram in accordance with an exemplary embodiment of this invention during an establishment of a secure channel between the card reader and the remote server.

## DETAILED DESCRIPTION OF THE EMBODIMENTS OF THE INVENTION

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

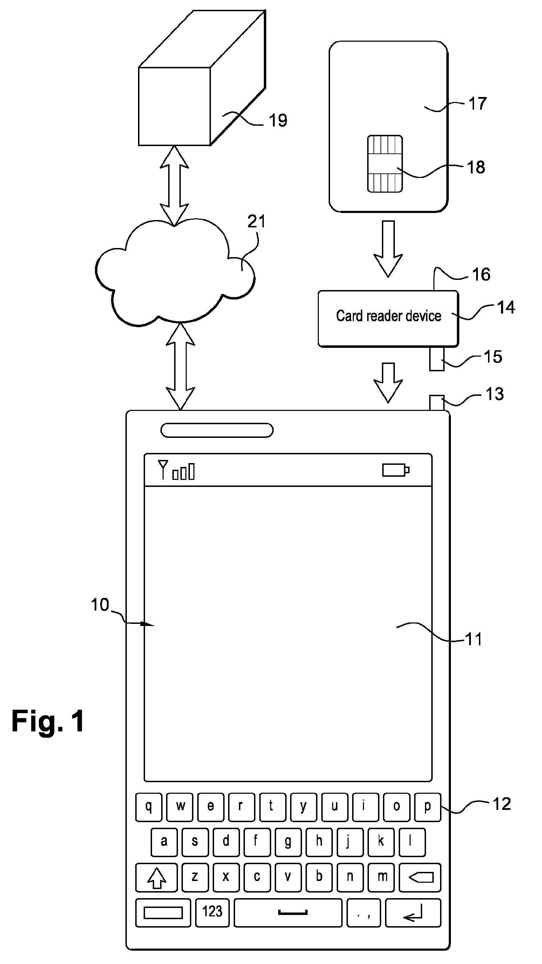

Furthermore, the connecting lines shown in the various figures contained herein are intended to represent exemplary functional relationships and/or physical couplings between the various elements. It should be noted that many alternatives or additional functional relationships or physical connections may be present in a practical system. Furthermore, the various entities in FIG. 1 may communicate via any suitable communication medium (including the Internet), using any suitable communication protocol.

Moreover, when an action is said to be performed by a device, it is in fact executed by a microprocessor in this device controlled by instruction codes recorded in a program memory on said device. An action is also ascribed to an application or software. This means that part of the instruction codes making up the application or software are executed by the microprocessor.

Reference throughout the specification to "an embodiment" or "another embodiment" means that a particular feature, structure, or characteristic described in connection with an embodiment is included in at least one embodiment of the subject matter disclosed. Thus, the appearance of the phrases "in an embodiment" or "in another embodiment" in various places throughout the specification is not necessarily referring to the same embodiment. Further, the particular features, structures or characteristics may be combined in any suitable manner in one or more embodiments.

FIG. 1 shows entities involved in a flow diagram for securing mobile transaction with a card reader. For simplicity of discussion, only one of each entity is shown at FIG.1. FIG. 1 depicts an example of the system in which a mobile device and a server are implemented.

Embodiments of the present invention will be exemplified using a mobile communication device such as a mobile phone. However, it should be appreciated that the invention is as such equally applicable to electronic devices which have wired- and/or wireless radio communication capabilities. Examples of such devices may for instance be any type of mobile phone, laptops (such as standard, ultra portables, netbooks, micro laptops, and pads), handheld computers, PDAs, gaming devices, accessories to mobile phones, etc. However, for the sake of clarity and simplicity, the embodiments outlined in this specification are exemplified with and related to mobile phones only.

The mobile phone 10 typically comprises a processor, a memory, input devices, output devices, and suitable communications scheme, all of which are operatively coupled to the processor. The mobile device 10 comprises, a display area 11, and means 12 for navigating among items displayed in the display area 11 and entering text and numbers into the mobile phone. The display area 11, which preferably is touch sensitive, may comprise one or more status indication areas and/or softkey bars. The display area 11, and the items displayed on it, may be operable using the navigation means 12 or by tapping the on it with a pen-like object or a finger. The mobile phone 10 may also comprise a communication interface 13 for external units. The mobile phone as a stand-alone device is from a secure transaction point of view classified as unsecure and not fit for conducting secure transaction with. Thus, a mobile phone in itself cannot be used for making secure transaction with.

A card reader device 14 comprises an interface 15 for connecting to another device such as the mobile phone 10 through preferably a free transport protocol. The interface 15 may be a typical communication interface (e.g. USB connector, audio connector etc.) used in the mobile communication and computer industry, or it may be a special interface used in conjunction with embodiments of the present invention. The card reader device 14 may be connected to the mobile phone 10 wirelessly or directly, using its communication interface 15. The card reader can be physically plugged into the mobile phone corresponding communication interface 13, or it could be connected via an adapter between the mobile phone's 10 communication interface 13 and the communication interface 15 of the card reader device 14. The card reader device may also in some variants of the embodiment be connected to the mobile phone 10 using a wire.

In another embodiment, the card reader 14 comprises a contactless interface capable of communicating using any suitable communications scheme with the mobile phone 10. The contactless interface can refer to a near-field communication (NFC) transceiver, a contactless reader or an unpowered RFID. The contactless interface of the card reader 14 establishes a contactless communication channel with the mobile phone 10 to exchange data using a short range communication method, such as a near field communications (NFC) capability. Examples of such NFC technologies or similar short range communications technologies include ISO standard 14443, RFID, Bluetooth(TM) and Infra-red communications methods.

In an example, a contactless communication channel can refer to exchanging information using NFC technology that requires the communicating devices to be "tapped", which means that the contactless interfaces are brought within several centimeters of each other.

In the embodiment illustrated herein, the interface 15 of the card reader 14 is an audio connector connected to the interface 13 of the mobile device 10 for establishing a communication using audio signal to exchange data.

The card reader device 14 may comprise a smart card reader slot 16 where a smart card 17 may fully (completely), or in part (only a part of), be inserted into. The card reader device 4 may in a variant of the embodiment also comprise a common magnetic stripe reader with a reader slit, through which a card may be slided to be read. The card reader 14 can be classified as an unsecure card reader device which is much cheaper to manufacture than a secure card reader device.

The smart card 17 may comprise a secure element 18. The secure element 18 is used to host and store data and applications that require a high degree of security. The smart card 17 is provided to the user by a secure element issuer. The secure element issuer may not necessarily be a member of the transaction process or the same entity as a server 19. The smart card 17 can be connected to the card reader 14 through a free transport protocol. Typically this free transport protocol can be ISO-7816 1,3 protocols.

The mobile phone 10 interacts with the card reader 14 through a mobile transaction application 20. The mobile transaction application is an application providing transaction capabilities implemented within the mobile phone 10. For example, during a transaction, the mobile transaction application 20 may interact with the server 19 over the network 21 to enable the transaction using the mobile phone. In an embodiment, the entity issuing the mobile transaction application can be the manufacturer of the card reader 14, the same entity as the server 19, or not a member of the transaction process. The server 19 communicates with the card reader 14 via the mobile transaction application 20 of the mobile phone 10 through the network 21.

The expression "transaction" can be taken in its broadest meaning. It cannot be limited to financial transaction but can also cover any Internet transaction; any transaction occurring through a telecommunication network etc. The term transaction is intended to broadly cover various actions such as payment requests, order requests, share transfers, funds transfers, proof of identity requests, requests to release information, or a combination of these actions. Such actions may also be initiated in variety of ways, for example, a payment request may originate from a credit card transaction at a physical store, a purchase on an ecommerce website (click-to-buy), or a remote payment system which uses a customer's mobile phone to pay for goods and services such as text-to-buy or talk-to-buy systems.

As used herein, a "server" is a computing device that may be configured to interact in an automated fashion with other devices over a network to serve content and web pages, to issue responses to communications from other network devices and to respond to queries from other network devices.

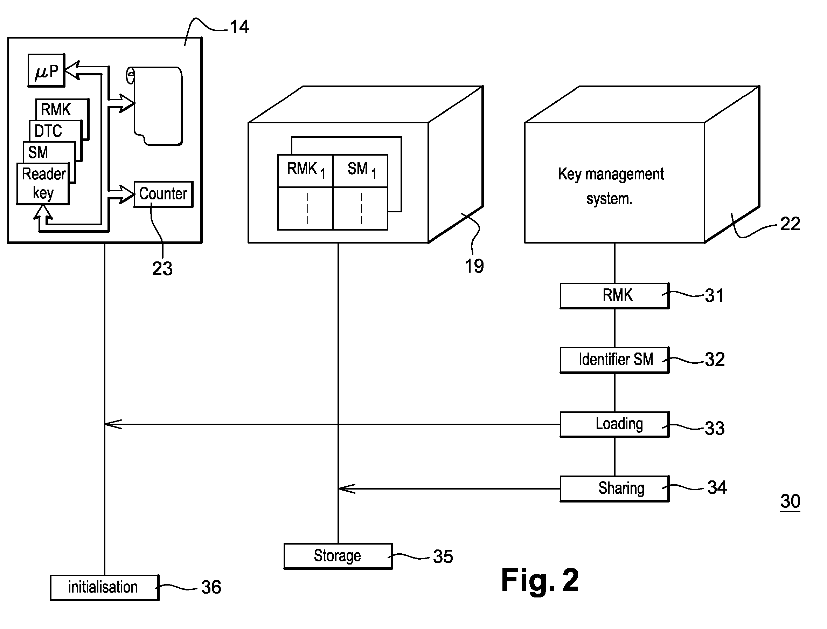

FIG.2 illustrates an exemplary flow diagram during a personalization phase 30 of the card reader device 14. Therein, the process flow between the card reader device 14, a key management system 22 and the server 19 is depicted with labeled arrows to which respective numbers are assigned. The flow is understood as being performed sequentially from top to bottom as indicated by the increasing numbers. However, it should be noted that there may be multiple instances of this protocol run in parallel without specified ordering.

FIG. 2 is a flow chart depicting a set of functions 30 that can be carried out in accordance with an example embodiment. The set of functions 30 can be performed during a personalization phase of the card reader 14. The set of functions 30 are shown within steps 31 through 36. A description of these steps now follows.

During this personalization process, a reader master key RMK is created. The reader master key RMK can be generated, at step 31, by the key management system 22. The key management system 22 as illustrated in FIG. 2 is a software program executing in a computer. The logical functions of the key management system software and the database may be distributed among computers in a client/server network or centralized into a single processor. The functions may also be distributed across processors connected through standard local area networks, wide area networks, dedicated phone lines or other communication means used to loosely couple processors. The key management system 22 can be executed by a manufacturer server of the card reader, by the server 19 or by any trusted system.

At step 32, an identifier of the card reader is generated. In an embodiment the identifier can be generated by the key management system 22. In another embodiment, this identifier can be generated by the manufacturer of the card reader. This identifier can be a serial number SN of the card reader 14. This identifier SN is preferably unique at each card reader.

In a preferred embodiment, the key management system 22 derives a reader key RK from a derivation algorithm, the master key RMK and the identifier SN. The derivation algorithm used herein is well known by the person in the art and do not need to be described any more.

At step 33, the key management system 22 loads into the card reader 14 the unique identifier SN and the derived reader key RK associated. In an embodiment, the card reader comprises a secure element herein the identifier SN and the reader key are loaded.

In an embodiment, the key management system 22 loads into the card reader the master key instead of the derived reader key. In this case, the card reader derives the reader key RK from the derivation algorithm, the master key RMK and the associated identifier SN. The derived reader key RK can be stored into the card reader for next use.

At step 34, the key management system 22 shares the generated master key RMK and the associated unique identifier SN with the server 19. Upon received, the server 19 stores into its database the master key RMK with the associated unique identifier SN of the card reader 14.

So, the key management system 22 create a static key for the card reader which must in turn be used to create session keys for communicating with the card reader 14 and the server 19.

Any suitable form of generation and share of the shared key and the identifier SN between the card reader and the server 19 may be implemented as one of ordinary skill would recognize. The way of how the shared key and the identifier SN are generated and shared between the entities is outside the scope of the present invention.

The card reader device 14 comprises a counter 23. This counter 23 can be named a Device Transaction counter DTC. At step 36, the card reader 14 initializes the counter 23, by assigning it a value DTC. The value DTC is an integer. In the embodiment illustrated in FIG.2 the initialized value DTC is a null value.

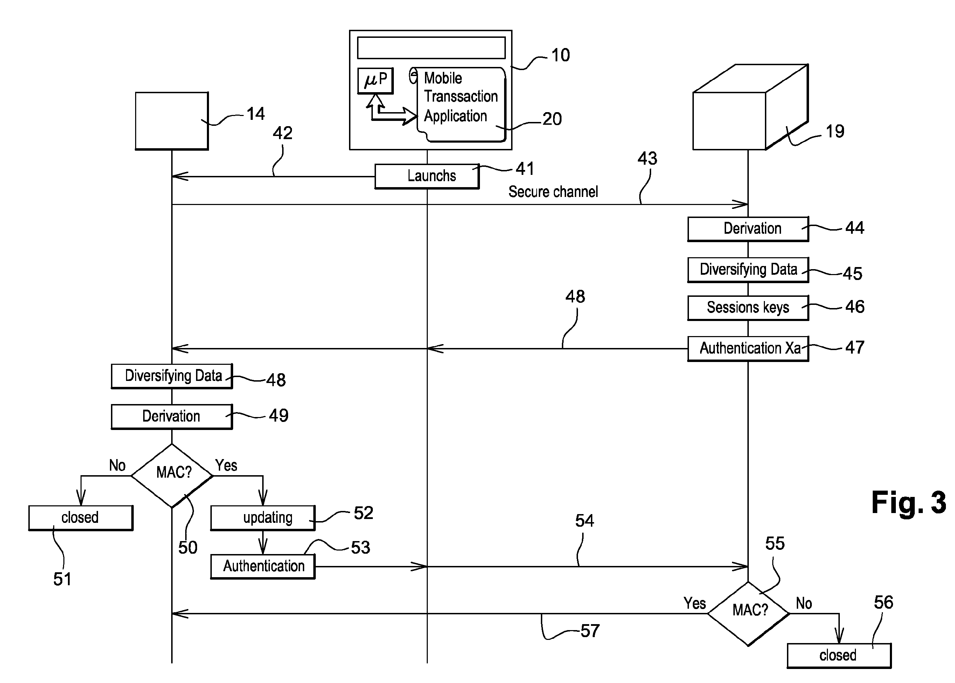

FIG. 3 illustrates an exemplary validation transaction flow diagram 40 with the card reader 14. To validate this transaction, the communication interface 15 of the card reader device 14 may be physically pushed into the communication interface of the mobile phone 10 and the smart card 17 may then be inserted into the card slot on the card reader device 14 or slided into the magnetic stripe reader.

When the validation of the transaction is initiated, the mobile transaction application 20 is launched by the mobile phone 10 at step 41. At step 42, the mobile transaction application 20 establishes a communication session with the card reader 14. When the card reader is set up, a request for the establishment of a secure channel is sent, at step 43, from the card reader 14 to the server 19 via the mobile transaction application. This request for the establishment of a secure channel may comprise the current value DTC of the counter 20 of the card reader and its identifier SN. The current value DTC is the last value DTC updated into the database of the card reader.

Upon reception, the server 19 extracts, at step 44, from its database the master key RMK associated to the received identifier SN. Then, the server 19 derives the reader key from the derivation algorithm, the extracted master key RMK and the received identifier SN.

In an embodiment, the key management system derives the reader key. This derived reader key is sent with its associated identifier SN to the server for storage. Then when the server received an identifier SN at step 43, it extracts from its database the corresponding reader key.

In another embodiment, the derived reader key or the master key (depend on the embodiment) is stored into a secure database. When the server received an identifier SN at step 43, it sends a request to this database to get the corresponding reader key or master key. Upon reception, the secure database extracts the reader key or the master key corresponding to the identifier SN. Next, the extracted reader key or master key is sent to the server in response.

At step 45, the server 19 defines the diversifying data which are used to compute session keys. For that, the server 19 increments the received current value of the counter 23 and generates a random value Server-RND or challenge. The generated random value can provide the guarantee to the server 19 that the current secure channel session has not been pre-computed and the legitimate card reader is indeed at the other end of the channel. The size of this random value does not need to be very large, few bits could be sufficient. The diversifying data comprises the incremented counter current value and the generated random value.

In an embodiment, the random value Server-RND is 3 bytes length. The 3 bytes length is large enough to have sufficient variability for the generated session keys. The 3 bytes length is small to mitigate the differential attacks on the card reader to retrieve the reader key.

At step 46, the server 19 derives the session encryption keys and the session integrity keys from the derived reader key, the diversifying data and the derivation algorithm.

At step 47, the server 19 elaborates an authentication request comprising the generated random value and a MAC value. The MAC signature value is the result of a MAC (Message Authentication Code) operation on at least one part over the random value. The MAC operation uses the session integrity keys and a cryptographic checksum algorithm to produce the MAC signature value which later can be used to ensure the data has not been modified.

At step 48, the server 19 sends the authentication request to the mobile transaction application 20 of the mobile phone 10 through the network 21. Upon reception, the mobile transaction application forwards the authentication request to the card reader 14.

At step 48 upon reception, the card reader 14 defines the diversifying data. For that, the card reader increments the current value of its counter 23 DTC. The diversifying data comprises the incremented value of the counter 23 and the received challenge or random value Server-RND. At step 49, the card reader 14 derives the session encryption keys and the session integrity keys from the derived reader key stored into its database, the defined diversifying data and the derivation algorithm.

At step 50, the card reader computes a MAC value from the received random value and the computed session integrity keys. The computed MAC value is compared to the received MAC value to check if the random value has been altered. In an embodiment, if the verification of the MAC value fails, the process flow can be closed, at step 51, and the card reader 14 may notify the mobile transaction application and/or the server 19 that the MAC value is tampered. If on the other hand the MAC value is successfully verified, the server 19 is authenticated by the card reader 14 as a legitimate server.

At step 52, when the authentication of the server 19 is successful, the current value of the counter is updated with the incremented value of the counter. This updated current value is stored into the database of the card reader. Since the current value of the counter is updated only when the authentication of the server is successful and different for every transaction the resulting session keys will be different, avoiding replay attacks.

In an embodiment, when the current value of the counter is updated into the database, the card reader 14 analyses whether the updated counter value has reached a predefined maximum value DTC_MAX. The predefined maximum value DTC_MAX is a maximum number of authorized transactions. This predefined maximum value can be defined by default by the card reader or by the manufacturer of the card reader. In an embodiment, the predefined maximum value DTC_MAX is entered by the user through the mobile transaction application of the mobile phone 10. The predefined maximum value DTC_MAX is preferably large enough to cover the full life of the card reader.

If the updated counter value is equal to the predefined maximum value DTC_MAX, then the card reader can be locked or in standby until a new predefined maximum value is defined.

At step 53, the card reader 14 elaborates an authentication request comprising the stored updated value of the counter 23 and a MAC value. The MAC signature value is the result of a MAC (Message Authentication Code) operation on at least one part over the updated value of the counter 23. The MAC operation uses the session integrity keys and a cryptographic checksum algorithm to produce the MAC signature value which later can be used to ensure the data has not been modified.

At step 54, the card reader 14 sends the authentication request to the mobile transaction application 20 of the mobile phone 10. Upon reception, the mobile transaction application forwards the authentication request to the server 19 through the network 21.

At step 55 upon reception, the server 19 computes a MAC value from the received updated value of the counter 23 and the computed session integrity keys. The computed MAC value is compared to the received MAC value to check if the updated value of the counter 23 has been altered. In an embodiment, if the verification of the MAC value fails, the process flow can be closed, at step 56, and the server 19 may notify the mobile transaction application and/or the card reader 14 that the MAC value is tampered and the card reader is not a legitimate one. If on the other hand the MAC value is successfully verified, the card reader 14 is authenticated by the server 19 as a legitimate one.

At step 57, when the authentication of the server 19 and the card reader 14 are successful, a secure session communication to validate the transaction is established between the card reader and the server 19.

The process flow described in FIG. 3 builds an end-to-end security between the card reader 14 and the server 19. The session encryption keys and the session integrity keys such as defined by the present invention provide a secure channel over which information can be transmitted securely through an authorized card reader through the mobile phone 10 over the network 21 and an authorized server 19. The session encryption keys and the session integrity keys are used to protect the confidentiality and integrity of the messages exchanged between the card reader 14 and the server 19

When the secure channel is set up at step 57, the server 19 and the card reader use the mobile application transaction as "a pass through gateway". The following steps can be performed to complete the validation transaction step:

- the server 19 encrypts and signs a command using a MAC signature, this command is sent to the mobile transaction application through the network 21,
- the mobile transaction application gets the encrypted/signed command,
- the mobile transaction application forwards the encrypted/signed command to the card reader,
- the card reader checks the signature, decrypts the command,
- the card reader sends the command to the smart card 17 and receives the response,
- the card reader encrypts and signs the response,
- the card reader returns the response to the mobile transaction application,
- the mobile transaction application sends the encrypted/signed response to the server.
  etc...

The server uses the secure channel to send smart card commands and receives smart card response. Once the validation transaction process is completed, the server closes the secure channel.

In an embodiment, the card reader comprises a disabling-counter. The card reader 14 initializes the disabling-counter by assigning it a null value. When the verification of the MAC fails at step 50 of FIG. 3, the card reader 14 increments the disabling-counter value with one unity. Then, the card reader analyses whether the disabling-counter value has reached a predefined maximum error, for example "three".

If the disabling-counter value is less than the predefined maximum error, then the validation transaction flow diagram 40 can be repeated once again. If the disabling-counter value is equal to the predefined maximum error, then the card reader can forbid going further by denying executing the next requested processing, while possibly sending to the user through the mobile phone 10 and/or the server 19 a message for informing them about its de-activation.

To re-activate the card reader 14, the user has to enter an unlock code. This code could be provided to the user in a separate medium and if necessary user may request that code from a service provider.

In another embodiment, the card reader comprises an errorcounter. The card reader 14 initializes the errorcounter by assigning it a null value. When an invalid incoming message is received on the secure channel established at step 57 of FIG. 3, the card reader 14 increments the errorcounter value with one unity. The incoming message can be a MAC value or an encrypted command received from the server 19.

Next, the card reader analyses whether the errorcounter value has reached a predefined maximum error, for example "three". If the errorcounter value is equal to the predefined maximum error, then the card reader can close the session and return ERR_SESSION_CLOSED to the user through the mobile phone 10 and/or the server 19.

These embodiments protect the card reader and provide flexibility on error management.

In another embodiment, the card reader 14 and the server 19 comprises a sequence number counter SCNTR. This sequence number counter SNCTR is incremented sequentially at each session transaction by the server and the card reader. At step 47 of FIG. 3, during the elaboration of the authentication request the server 19 initializes or increments sequentially its sequence number counter SCNTR. And when the server is authenticated by the card reader 14 at step 50, the card reader initializes or increments sequentially its sequence number counter SCNTR.

This sequence number value SCNTR is added to the authentication request sent by the card reader 14 to the server 19 at step 53 of FIG. 3. At step 55 during the verification of the MAC the server 19 checks if the received sequence number SCNTR is an expected one, i.e. if the received SCNTR is equal to the value of its SCNTR counter. If no, the verification of the message authentication code will fail. The sequence number value as defined by the present invention allows protecting the card reader from replay attacks. Indeed, the previous command cannot be replayed because the verification of the MAC fails on the server side. In an embodiment, the sequence number value is a 2 bytes length.

In an embodiment, the session encryption keys and the session integrity keys comprise four symmetric keys unique for each transaction session. The four symmetric session key can be:

- transmission encryption key TENC used by the server to encrypt the command. The transmission encryption key TENC is used by the card reader to decrypt the commands,
- transmission integrity key TMAC used by the server to compute a MAC value from the command. The transmission integrity key TMAC is used by the card reader to check the received MAC value,
- reception encryption key RENC used by the card reader to encrypt the responses of the command. The reception encryption key RENC is used by the server to decrypt the received responses,
- reception integrity key RMAC used by the card reader to compute a MAC value from the command responses. The reception integrity key RMAC is used by the server to check the received MAC value,

An example of computation functions used to implement the present invention are illustrated below. The following cryptographic data and securities features are provided for these computation functions:

- identifier SN: 8 bytes binary encoded decimal,
- Master key RMK: 16 bytes generated in a HSM using the "key ceremony",
- counter DTC: 4 bytes MSB-First,
- predefined maximum value DTC_MAX: 50000.
- sequence number value SCNTR: 2 bytes: MSB-First
- reader key: 16 bytes 3DES key for TMAC, RMAC, TENC, RENC

Computing the reader key:

Function Compute readerkey {masterkey, identifier SN}
{(8bytes)RKA:= 3DES_MAC (masterkey, 0x000000 | 0x0100000000 | identifier SN);
(8bytes)RKB: = 3DES_MAC (masterkey, 0x000000 | 0x0200000000 | identifier SN);
Return RKA | RKB;}

Computing the session keys:

- Function Compute TENC (readerkey, random value, DTC)
{(32 bytes) r = HMAC_SHA2 (readerkey,
0x00000001 (4 bytes)|
random value (3 bytes) DTC (4 bytes)) return 16 right bytes}

- Function Compute TMAC (readerkey, random value, DTC)
  {(32 bytes) r = HMAC_SHA2 (readerkey,
  0x00000001 (4 bytes)|
  random value (3 bytes)| DTC (4 bytes)) return 16 left bytes}

- Function Compute RENC (readerkey, random value, DTC)
  {(32 bytes) r = HMAC_SHA2 (readerkey,
  0x00000002 (4 bytes)|
  random value (3 bytes)| DTC (4 bytes)) return 16 right bytes}

- Function Compute RMAC (readerkey, random value, DTC)
  {(32 bytes) r = HMAC_SHA2 (readerkey,
  0x00000002 (4 bytes)|
  random value (3 bytes)| DTC (4 bytes)) return 16 left bytes}

The session keys TENC, TMAC, RENC AND RMAC are computed by using additional data, e.g random value generated by an external entropy source or a constant value and by using HMAC-SHA2 algorithm. The result of the computation function of integrity keys and encryption keys can be different and can perform enough variability and unpredictability of session keys, and the impossibility to force the re-computation and replay of previous session keys. It is up to the embodiments to perform such variability and unpredictability of the session keys, and the impossibility to force the re-computation and replay of previous session keys.

Encrypting the data:

The encryption function can handle padding.
Function EncryptData (iv(8 bytes), data, encryption-key)
{block = data | <0...>| pad-length (1 byte)
block-size can be 8 bytes length.
return 3DES_CBC_ENC(iv, block, key)}

Decrypting the data:

The decryption function can return null if the encrypted-data is wrong for instance due to padding inconsistency.
Function DecryptData (iv, data, encryption-key)
{Block = 3DES_CBC_DEC (iv, data, encryption-key)
check padding: last byte value is 1 to 8, padded data is "00"
if OK Remove the padding.
return the decrypted block.
else return null}

Computing the MAC:

The MAC value can be a 8 bytes length
Function Compute MAC (data, mac-key)
{block = HMAC-SHA256(data, mac-key)
return 8 left bytes}
In an embodiment, the session keys are retrieved by the card reader host controller of the card reader. The functions EncryptData(), DecryptData(), ComputeMac() are implemented in the card reader firmware and not in the Secure Element.
In another embodiment, the session keys are stored in the secure element of the card reader and the functions EncryptData(), DecryptData(), ComputeMac() are implemented in the secure element.
An example of implementation of the present invention is illustrated below. For this implementation the computation functions above described are used.
The kind of commands/responses available:

Syntax '/' means data concatenation.

COMMAND: CMD-CODE |

CMD-DATA (if any, the data depends on the CMD)

CMD-CODE:= {GET identifier SN, // available to the transaction application GETSTATUS, // available to the transaction application

SESSIONETUP, // available to server

SENDAPDU, // available to server

READMAGSTRIPE // available to server}

RESPONSE: RESP-CODE (1 byte) |

RESP-DATA (if any, the format depends on the RESP-CODE)

RESP-CODE:= { ACK, ERR };

ERR-DETAIL:= {ERR_INVALID_MAC, // the received message authentication code is invalid

ERR_BLOCKED, // the reader is blocked

ERR_DEC, // the decrypted data is invalid (padding error).

ERR_SESSION_CLOSED}

If RESP-CODE == ERR then RESP-DATA:= ERR-DETAIL

Validation transaction flow diagram:

1: the transaction application sends the commands GET identifier SN to the card reader

GET identifier SN| (empty)

2: the card reader returns

ACK | SN

3: the transaction application sends the command GETSTATUS GETSTATUS| (empty)

4: the card reader returns

ACK | <status data including Device Transaction Number DTC>

5: the transaction application sends the SN and the DTC to the server.

6: the server responds with a SESSIONETUP command.

The SESSIONETUP requires the server to generate authentication message. This MAC will be used by the card reader to verify that the server is genuine.

The server generates a server-challenge or a random value. The server computes the session keys.

READERKEY:= Compute ReaderKey (MASTERKEY, SN)

TMAC = Compute TMAC (READERKEY, server-challenge, DTC + 1)

RMAC = Compute RMAC (READERKEY, server-challenge, DTC + 1)

TENC = Compute TENC (READERKEY, server-challenge, DTC + 1)

RENC = Compute RENC (READERKEY, server-challenge, DTC + 1)

The server computes the MAC of the message with Initial Vector

iv:= { 0x00, 0x00, 0x00, 0x00, 0x00, 0x00, 0x00, 0x00 }

MAC value:= Compute MAC (iv | server-challenge, TMAC)

The server sets the sequence number value to {0x00, 0x01}

The server sends the Command = SESSIONETUP | server-challenge | MAC value to the transaction application,

7: the transaction application passes the command to the card reader

8: the card reader handles the SESSIONETUP command.

The card reader computes the new session keys.

TMAC:= Compute TMAC (READERKEY, server-challenge, DTC + 1)

TENC:= Compute TENC (READERKEY, server-challenge, DTC + 1)

RMAC:= Compute RMAC (READERKEY, server-challenge, DTC + 1)

RENC:= Compute RENC (READERKEY, server-challenge, DTC + 1)

The card reader computes the MAC value of the message with Initial vector iv:= { 0x00, 0x00, 0x00, 0x00, 0x00, 0x00, 0x00, 0x00 } MAC value:= Compute MAC (iv | server-challenge, TMAC)

The card reader checks that the received MAC value is equal to the computed one.

On failure it returns ERR_INVALID_MAC.
Otherwise the reader checks the DTC is less than DTC_MAX
If DTC == DTC_MAX
The card reader returns ERR_BLOCKED
Otherwise THE SERVER IS AUTHENTICATED.
The card reader initializes the internal counters
Sequence number value = {0x00, 0x01}
ERRORCOUNTER:= 0
The card reader increments the DTC.
DTC:= DTC + 1.
The card reader generates the message authentication code for the server
Iv = { 0x00, 0x00, 0x00, 0x00, 0x00, 0x00 }| SNCTR;
MAC value:= Compute MAC (iv | DTC, RMAC);
and returns ACK | DTC | MAC value.

9: the transaction application passes the SESSIONETUP response to the server

10: the server checks the SESSIONETUP response.
Response = ACK | DTC MAC value
The server checks the received message authentication code
iv:= { 0x00, 0x00, 0x00, 0x00, 0x00, 0x00 }| SCNTR = {0x00, 0x00}
MAC value = Compute MAC (iv | DTC, RMAC)
The server checks if the received MAC value is equal to the compute one.
On failure the server returns: COMPLETED_ERROR.
Otherwise, the card reader is authenticated. At this moment, the SESSIONETUP is completed. The card reader/server mutual authentication has been successfully performed. The server can send commands SENDAPDU or READMAGSTRIPE.

11: on valid SESSIONETUP or SENDAPDU response, the server sends a smart card command (apdu). The processing for magstripe command according the secure channel aspect is identical.
The server encrypts the apdu.
apdu:={....}
the initial vector iv is:

iv:= { 0x00, 0x00, 0x00, 0x00, 0x00, 0x00 }| SCNTR
encrypted-data:= EncryptData(iv, apdu, TENC);

The server computes the message authentication code.
MAC value:= Compute MAC(iv | encrypted-apdu, TMAC)
Finally, the message is
SENDAPDU | sequence number value | encrypted-data | MAC value.

12: the transaction application passes the server command to the card reader

13: the card reader handles the SENDAPDU command
Command = SENDAPDU | SCNTR | encrypted-data | MAC value
The card reader checks the received message authentication code
Iv: { 0x00, 0x00, 0x00, 0x00, 0x00, 0x00 }| SCNTR
MAC value:= Compute MAC(iv | encrypted-apdu, TMAC);
The card reader checks the MAC value against the received one.
On failure the reader increments the ERRORCOUNTER.
If (ERRORCOUNTER == 3) it closes the session and
Returns ERR | ERR_SESSIONCLOSED
Else it returns ERR | ERR_INVALID_MAC
If the MAC value verification is successful, the card reader decrypts the encrypted apdu
apdu:= DecryptData(iv, encrypted-apdu, TENC)
On failure the card reader increments the ERRORCOUNTER
If ERRORCOUNTER == 3 it closes the session and returns

ERR | ERR_SESSIONCLOSED

else it returns ERR | ERR_DEC;

If the decryption is successful, the card reader clears the errorcounter.

ERRORCOUNTER:= 0.

The card reader sends the apdu to the smart card and receives the response.

The card reader encrypts the response

rapdu = {....}

iv:= { 0x00, 0x00, 0x00, 0x00, 0x00, 0x00 }| SCNTR

Encrypted-rapdu:= EncryptData(iv, rapdu, RENC);

The card reader generates the message authentication code

MAC value = Compute MAC(iv | encrypted-rapdu, RMAC)

Finally, the card reader generates the response

ACK | encrypted-rapdu | mac.

The card reader increments the sequence number SCNTR counter for next incoming command.

SCNTR:= SCNTR + 1.

14: the transaction application sends the response to the server

15: the server handles the response.

response = ACK | encrypted-rapdu |MAC value.

The server checks the received message authentication code

iv:= { 0x00, 0x00, 0x00, 0x00, 0x00, 0x00 }| SCNTR

MAC value = Compute MAC (iv | encrypted-rapdu, rxMacKey)

If (computed MAC value == received MAC value) the server decrypts the response

rapdu = DecryptData(iv, encrypted-rapdu, RENC)

if (rapdu is null)

the server returns COMPLETED_ERROR.

The server generates new command (see steps 11 to 15);

or complete the session by sending COMPLETED_OK.

16: the transaction application presents the user with the completion status.

With the present invention smart card data are not transmitted in clear to the mobile transaction application, and they do not circulate in clear during the transfer from the mobile device to the remote server.

The invention is simple and easy to implement. A mutual authentication between the payment application and the gateway is performed to ensure the confidentiality of user credentials and the integrity/origin of the message.

The protocol as defined by the present invention allows protecting the card reader against differential attacks by:

- mandating message authentication code in session setup and all commands,
- restricting the size of the challenge used to compute the message authentication code in the session setup.

Furthermore, the protocol as defined by the present invention is self reliable by 1) using the MAC feature and 2) by verifying the consistence of the decrypted data by verifying the result padding.

**Claims**

1.  A method for securing a transaction between a low cost card reader connected to a mobile device and a remote server wherein when a validation step of the transaction is initiated:

    - deriving a session encryption key and session integrity key from a reader key and a diversifying data, said diversifying data comprising a random value generated by the server and an updated predictable value generated by the card reader,
    - when an authentication of the server by the card reader is successful, the predictable value is updated,
    - when an authentication of the card reader by the server is successful, a secure session channel between the card reader and the server is set up wherein the session encryption key and the session integrity key protect the confidentially and the integrity of messages exchanged between the card reader and the server,
    - sending commands from the server to a smart card connected to the card reader via the secure session channel,

- receiving commands responses from the smart card to the server through the card reader via the secure channel.

2. The method according to the previous claim, wherein the reader key is derived from a master key and an identifier of the card reader.

3. The method according to any previous claim, wherein the derivation session keys by the server comprises the following steps:

   - a request for the establishment of a secure channel is sent from the card reader to the server through the mobile device, wherein said request comprises the current updated predictable value and the card reader identifier,
   - incrementing the received predictable value,
   - generation of the random value,
   - derivation by the server of the session encryption key and the session integrity key from the stored reader master key, the received card reader identifier, the generated random value, and the incremented received predictable value.

4. The method according to any previous claims, wherein the random value is a 3 bytes length.

5. The method according to any previous claims, wherein the authentication step of the server by the card reader comprises the following steps:

   - computing a MAC signature value from the session integrity key and at least one part of the contents of the generated random value,
   - a request of authentication is sent from the server to the card reader through the mobile device, wherein said request comprising the generated random value and the computed MAC value,
   - upon the authentication request is received by the card reader, incrementing the last updated predictable value,
   - derivation by the card reader of the session encryption keys and the session integrity keys from the reader master key, the card reader identifier, the received random value, and the incremented last updated predictable value,
   - the server is authenticated by the card reader if a verification of the received MAC value is successful.

6. The method according to any previous claims, wherein:

   - updating the current predictable value with the incremented value when the authentication of the server is successful,
   - storing the new updated predictable value into the database of the card reader.

7. The method according to any previous claims, wherein when the updated predictable value reached a predefined maximum predictable value, the card reader is locked or in standby until a new predefined maximum value is defined.

8. The method according to any previous claims, wherein the authentication step of the card reader by the server comprises the following steps:

   - computing a MAC signature value from the session integrity key and at least one part of the updated predictable value,
   - a request of authentication is sent from the card reader to the server through the mobile device, wherein said request comprising the updated predictable value and the computed MAC value,
   - the card reader is authenticated by the server if a verification of the received MAC value is successful.

9. The method according to any previous claims, wherein

   - when the authentication request of the server is sent to the card reader, a sequence number counter of the server is incremented sequentially,
   - when the server is authenticated by the card reader, a sequence number counter of the card reader is incremented sequentially,
   - the authentication request of the card reader by the server comprises the current sequence number value of the card reader,

- the server checks if the received sequence number value corresponds to the value of its sequence number counter,
- if the verification is successful, the received MAC value is verified to authenticate the card reader.

10. The method according to any previous claims, wherein

- incrementing a disabling-counter of the card reader when the authentication of the server by the card reader fails,
- if the disabling-counter value reached a predefined maximum error, the card reader de-activates itself.

11. The method according to any previous claims, wherein after the establishment of the secure channel,

- incrementing an errorcounter of the card reader when an invalid incoming message is received,
- if the errorcounter value reached a predefined maximum error, the card reader closes the session of the validation step transaction,
- when the validation step transaction session is completed and the errorcounter value is less than the predefined maximum error, the errorcounter is cleared.

12. The method according to any previous claims, wherein the identifier of the card reader is a serial number unique at each card reader.

13. The method according to any previous claims, wherein the predictable value is generated by a counter of the card reader

14. The method according to any previous claims, wherein the session encryption key and the session integrity key comprise four symmetric keys unique for each transaction session,

- transmission encryption key TENC used by the server to encrypt the command to the smart card connected to the card reader, the transmission encryption key TENC is used by the card reader to decrypt the commands,
- transmission integrity key TMAC used by the server to compute a MAC value from the command, the transmission integrity key TMAC is used by the card reader to check the received MAC value,
- reception encryption key RENC used by the card reader to encrypt the responses of the command, the reception encryption key RENC is used by the server to decrypt the received responses,
- reception integrity key RMAC used by the card reader to compute a MAC value from the command responses, the reception integrity key RMAC is used by the server to check the received MAC value.

15. A validation transaction processing system, comprising an unsecure card reader connected to a mobile device and a remote server wherein validation transaction messages transiting between a smart card connected to the card reader and the remote server are secured according to any previous claims.

**Fig. 1**

**Fig. 2**

EP 2 874 421 A1

Fig. 3

Europäisches
Patentamt

European
Patent Office

Office européen
des brevets

# EUROPEAN SEARCH REPORT

**Application Number**

EP 13 30 6551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/095919 A1 (HART ANNMARIE D [US] ET AL) 19 April 2012 (2012-04-19)<br>* paragraph [0002] *<br>* paragraph [0005] - paragraph [0006] *<br>* paragraph [0018] - paragraph [0033] *<br>* paragraph [0038] - paragraph [0056] *<br>* figure 1 *<br>* claims 1-28 * | 1-15 | INV.<br>H04W12/06<br>H04L29/06<br>G06Q20/32<br>G06Q20/20<br>G06Q20/40<br>G06Q20/38 |
| A | US 2013/179351 A1 (WALLNER GEORGE [US]) 11 July 2013 (2013-07-11)<br>* paragraph [0001] *<br>* paragraph [0008] - paragraph [0011] *<br>* paragraph [0021] - paragraph [0023] *<br>* figures 1,3a,3b * | 1-15 | |
| A | WO 2012/003892 A1 (IZETTLE HARDWARE AB [SE]; LUND STEFAN [SE]) 12 January 2012 (2012-01-12)<br>* page 1, line 5 - page 5, line 5 *<br>* page 11, line 23 - page 15, line 16 *<br>* page 17, line 15 - page 19, line 10 *<br>* figure 2 * | 1-15 | |
| | | | TECHNICAL FIELDS SEARCHED (IPC) |
| A | EP 1 349 031 A1 (UBS AG [CH]) 1 October 2003 (2003-10-01)<br>* paragraph [0078] - paragraph [0135] *<br>* figures 1,13 * | 1-15 | H04W<br>G06Q<br>H04L |
| A | US 2013/119130 A1 (BRAAMS HARM [NL]) 16 May 2013 (2013-05-16)<br>* paragraph [0091] - paragraph [0100] *<br>* paragraph [0110] - paragraph [0172] *<br>* figure 2 * | 1-15 | |

-/--

The present search report has been drawn up for all claims

| Place of search | Date of completion of the search | Examiner |
|---|---|---|
| Munich | 28 May 2014 | Olaechea, Javier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

**EP 2 874 421 A1**

# EUROPEAN SEARCH REPORT

**Application Number**

EP 13 30 6551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DIERKS INDEPENDENT E RESCORLA RTFM T ET AL: "The Transport Layer Security (TLS) Protocol Version 1.2; rfc5246.txt", THE TRANSPORT LAYER SECURITY (TLS) PROTOCOL VERSION 1.2; RFC5246.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 2008 (2008-08-01), XP015060256, * Sections 6-8 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 28 May 2014 | Olaechea, Javier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6551

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2014

| Patent document cited in search report | | Publication date | Patent family member(s) | | Publication date |
|---|---|---|---|---|---|
| US 2012095919 | A1 | 19-04-2012 | US | 2012095919 A1 | 19-04-2012 |
| | | | WO | 2012051590 A1 | 19-04-2012 |
| US 2013179351 | A1 | 11-07-2013 | NONE | | |
| WO 2012003892 | A1 | 12-01-2012 | AU | 2010357028 A1 | 28-02-2013 |
| | | | AU | 2011275691 A1 | 21-02-2013 |
| | | | EP | 2559012 A1 | 20-02-2013 |
| | | | SG | 186958 A1 | 28-02-2013 |
| | | | SG | 186959 A1 | 28-02-2013 |
| | | | US | 2013144792 A1 | 06-06-2013 |
| | | | US | 2013173475 A1 | 04-07-2013 |
| | | | WO | 2012003892 A1 | 12-01-2012 |
| | | | WO | 2012004395 A1 | 12-01-2012 |
| EP 1349031 | A1 | 01-10-2003 | AT | 253745 T | 15-11-2003 |
| | | | DE | 10212620 A1 | 09-10-2003 |
| | | | DE | 60200081 D1 | 11-12-2003 |
| | | | DE | 60200081 T2 | 22-04-2004 |
| | | | EP | 1349031 A1 | 01-10-2003 |
| | | | US | 2003177353 A1 | 18-09-2003 |
| US 2013119130 | A1 | 16-05-2013 | US | 2013119130 A1 | 16-05-2013 |
| | | | WO | 2013074631 A2 | 23-05-2013 |

EPO FORM P0459

For more details about this annex : see Official Journal of the European Patent Office, No. 12/82